Europäisches Patentamt

European Patent Office

Office européen des brevets

(11) Publication number: **0 308 126**
**A2**

## (12) EUROPEAN PATENT APPLICATION

(21) Application number: 88308258.8

(22) Date of filing: 07.09.88

(51) Int. Cl.⁴: **H02P 8/00 , G04C 3/12 , G01D 5/34**

(30) Priority: 08.09.87 JP 224849/87

(43) Date of publication of application:
**22.03.89 Bulletin 89/12**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Hirotomi, Jun**
**Seiko Instruments Inc. 31-1 Kameido**
**6-chome**
**Koto-ku Tokyo(JP)**

(74) Representative: **Caro, William Egerton et al**
**J. MILLER & CO. Lincoln House 296-302 High**
**Holborn**
**London WC1V 7JH(GB)**

(54) **A drive circuit for an actuator.**

(57) A drive circuit for driving an actuator to cause intermittent movement to a given displacement comprises an oscillator circuit (101) for generating a clock signal, a divider circuit (102) for frequency dividing the clock signal and a timing circuit (103) for producing a drive timing signal in response to an output from the divider circuit. A displacement detecting circuit (109) detects the given displacement of the actuator and a counter (108) counts an amount of drive signals applied to the actuator during each intermittent drive thereof. A setting circuit (106) sets a drive condition of the actuator according to counted data from the counter (108) and a drive detecting circuit (107) detects the drive state of the actuator. A controller (105) selects a plurality of drive modes according to the set drive condition and detected drive state thereby to control the drive of the actuator.

FIG.1

EP 0 308 126 A2

# A DRIVE CIRCUIT FOR AN ACTUATOR

This invention relates to drive circuits for actuators.

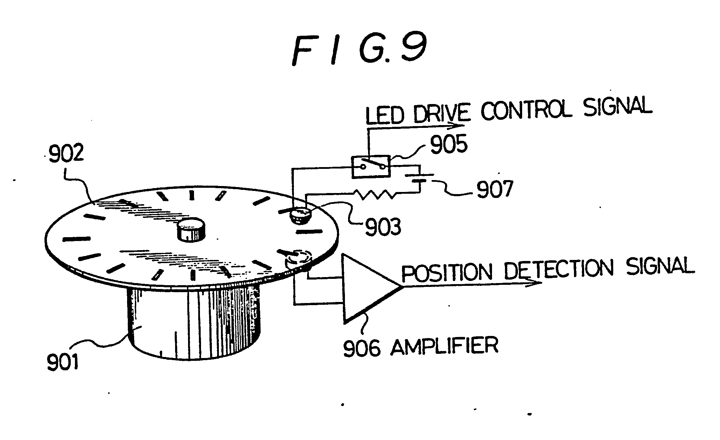

Position displacement detectors for use in actuators utilise a change of light, magnetism or electro-static capacitance or mechanical contact. In a conventional actuator, displacement detection is successively carried out for every intermittent drive thereof. The displacement or position detection may consume almost all available power. For example, as shown in Figure 9, a photo-detector is comprised of a silicon photo-diode 903 as a light source which consumes 10 to 20 mW. If a power source 907, controlled by a switch 905 itself conditioned by a LED drive control signal, is comprised of a small battery such as a silver battery of button type (capacity 20 - 100 mWh) or a lithium battery of button type (capacity 50 to 300 mWh), the life of the power supply is shortened due to successive detection of displacement or position.

In a rotary actuator 901, such as shown in Figure 9, a detection disc 902 is divided into a given number of angular sections for the successive detection of angular displacement during intermittent drive of the actuator. The detection disc 902 has a given number of slits in the case of photo-detection or a given number of patterns in the case of mechanical contact detection. The provision of slits and patterns needs space and involves fabrication cost. The output of a photo-detector 904 receiving light from the photo-diode 903 via the slits is amplified by an amplifier 906 to provide a position detection signal.

The present invention seeks to provide a drive circuit to control the period of displacement or position detection in an intermittently drivable actuator having a displacement or position detector so as to reduce power consumption needed for displacement or position detection without an accumulating displacement error, and to reduce the number of slits, patterns, magnets, etc. needed for the detection in a multi-divided and intermittently drivable actuator.

According to the present invention, there is provided a drive circuit for driving an actuator to cause intermittent movement through a given displacement characterised by comprising: oscillator means for generating a clock signal; divider means for frequency dividing the clock signal; timing means for producing a drive timing signal in response to an output from the divider means; displacement detecting means for detecting the given displacement of the actuator; counting means for counting an amount of drive signals applied to the actuator during each intermittent drive thereof; setting means for setting a drive condition of the actuator according to counted data from the counting means; drive detecting means for detecting a drive state of the actuator; and controller means for selecting a plurality of drive modes according to the set drive condition and detected drive state thereby to control the drive of the actuator.

In the preferred embodiment, the setting means comprises adding means for adding the counted data to store the added data, calculating means for calculating a mean amount of the drive signals needed for one intermittent drive of the actuator based on the stored data, and gate means connected to the calculating means for producing a gate signal effective to output the mean amount of the drive signals thereby to set the drive condition.

The drive detecting means may include difference calculating means for calculating a difference between the mean amount of the drive signals and a sample amount of the drive signals applied to the actuator in response to a drive timing signal until the detection of the given displacement thereby to detect the drive state of the actuator.

Preferably the controller means includes selecting means for selecting a first mode in which the mean amount of the drive signals is calculated during intermittent drive of the actuator, a second mode in which the mean amount of the drive signals is successively applied to the actuator for a predetermined number of intermittent drives of the actuator, and a third mode in which the difference between the mean amount of the drive signals and a sample amount of the drive signals applied to the actuator until the detection of the given displacement is calculated after the predetermined number of intermittent drives.

In order to solve the above mentioned problems of known drive circuits for actuators, in the present invention the actuator has a controller for controlling a drive mode thereof so as to enable the intermittent drive thereof without successive detection of displacement or position and displacement error. The actuator is selectively operated in a first drive mode in which a mean duration or mean pulse number of drive pulse signals per intermittent drive is calculated during a given number of intermittent drives, a second drive mode in which the drive pulse signals having the calculated mean duration or mean pulse number are successively applied to the actuator for a predetermined number of intermittent drives, and a third drive mode in which the actuator is driven intermittently once with the detection of displacement or position and the duration or pulse number of the drive signals at this time is compared with the calculated mean duration or mean pulse number to calculate the difference therebetween. The controller controls the drive mode according to the calculated difference.

According to the above described structure, the actuator having the displacement detector is driven intermittently through a given displacement which is determined by the displacement or position detection each time for the first given number of intermittent drives thereby to calculate the mean drive duration or mean drive pulse number per intermittent drive. Thereafter, the actuator is intermittently driven according to the calculated mean value without successive displacement or position detection or great error of displacement.

Further, in the third drive mode, after the intermittent drives according to the calculated mean value, another intermittent drive is carried out with the detection thereby to count the drive duration on the drive pulse number at that time. The difference between the counted value and the calculated mean value is calculated to determine whether a new mean value should be calculated or the calculated mean value should be maintained. For example, in a rotary actuator angularly intermittently driven through one rotation, the rotary actuator can be driven in the third drive mode once for each complete revolution thereby to effect correction each complete revolution.

The invention is illustrated, merely by way of example, in the accompanying drawings, in which:-

Figure 1 is a block diagram of one embodiment of a drive circuit according to the present invention for an actuator;

Figure 2 is a block diagram of a controller of the drive circuit of Figure 1;

Figure 3 is a time chart illustrating the operation of the controller of Figure 2 in a first drive mode;

Figure 4 is a flow chart illustrating the operation of the drive circuit of Figure 1;

Figure 5 is a cross section of part of an analog electronic timepiece having a super-sonic wave motor and a drive circuit according to the present invention;

Figure 6 is an explanatory diagram showing ranges through which the hands of the electronic timepiece of Figure 5 are driven in various drive modes;

Figure 7 is a plan view of a seconds wheel of the electronic timepiece of Figure 5;

Figure 8 is a timing chart illustrating displacement or position detection in the electronic timepiece of Figure 5; and

Figure 9 is a perspective view of a conventional position detector.

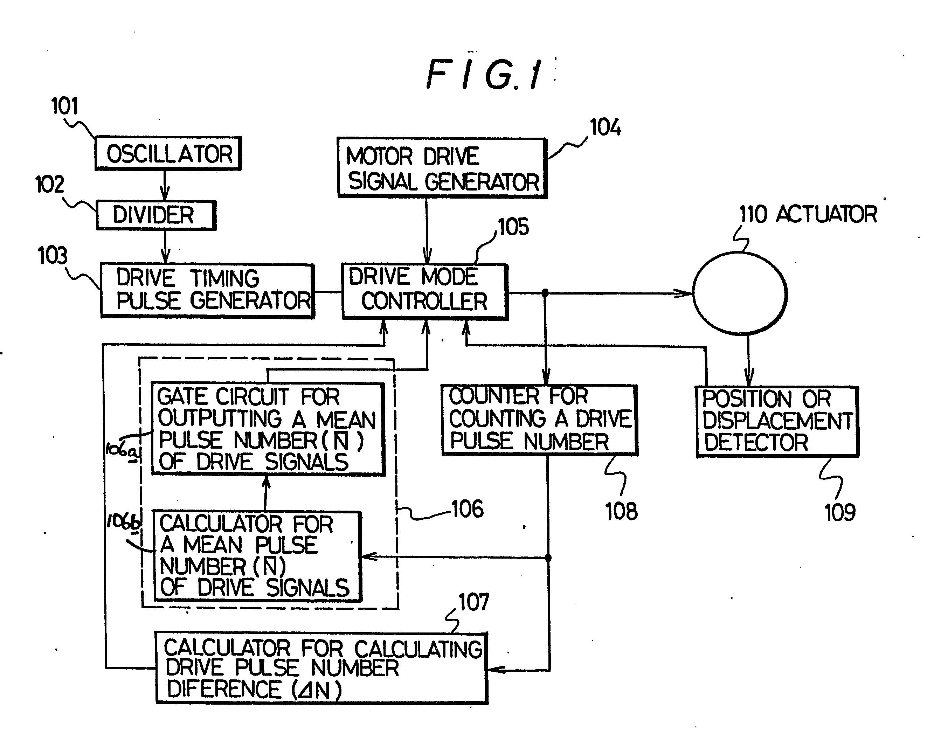

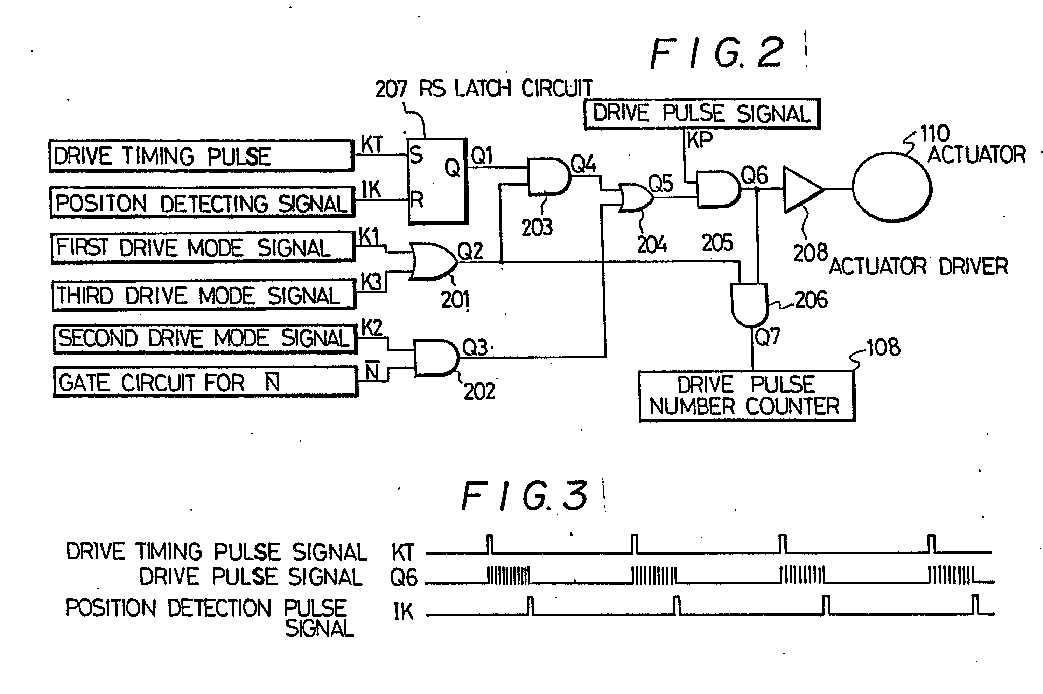

Referring first to Figure 1, there is shown one embodiment of a drive circuit according to the present invention for an actuator.

An oscillator 101 feeds a standard clock signal to a frequency divider 102. A timing circuit 103 generates a timing pulse signal, in response to the output of the frequency divider 102, and is effective to initiate each intermittent drive of the actuator 110. A controller 105 applies motor drive signals to the actuator 110 according to a selected drive mode in response to each timing pulse signal. In a first drive mode, a setting circuit 106 calculates a mean number of drive signals per intermittent drive according to count data of a counter 108 which counts the number of drive signals applied to the actuator 110 each intermittent drive so as to set a drive mode. The setting circuit 106 comprises a gate circuit 106a for outputting the mean number of drive signals and the calculator 106b for calculating the mean number. The setting circuit also has adding means (not shown) for adding the data counted by the counter 108 and to store the added data.

In a second drive mode, the setting circuit 106 outputs a gate signal to produce a set of drive signals having the mean number calculated in the first drive mode. Further, in a third drive mode, a difference calculating circuit 107 calculates the difference between the count data in the counter 108 and the mean number thereby to output the difference to the controller 105 to detect or monitor a drive state of the actuator 110. The controller 105 receives a signal from a motor drive signal generator 104 and selects the drive modes based on the difference or the drive state fed from the difference calculating circuit 107. A displacement or position detecting circuit 108 detects given displacement or position of the actuator 110 and provides an output to the controller 105.

Next, the first drive mode in which a mean drive duration or mean number of drive pulses per intermittent drive is calculated by counting a drive duration or number of drive pulses until each completion of the displacement or position detection to a given number of intermittent drives.

Figure 2 is a circuit block diagram of the controller 105 for controlling the drive state of the actuator. At an initial stage, a first drive mode signal K1 is held at signal level "H" and a second drive mode signal K2 and a third drive mode signal K3 are held at signal level "L". Since the second drive mode signal K2 is held at level "L" an output of an AND gate 202 is held at level L so that an OR gate 204 is not activated by the AND gate 202. An AND gate 205 for controlling drive signals is controlled by an output Q5 of the OR gate 204. The OR gate 204 receives an output Q4 from an AND gate 203. The AND gate 203, in turn, receives an output Q1 of an RS latch circuit 207 and an output Q2 of an OR gate 201 which receives the first drive mode signal K1.

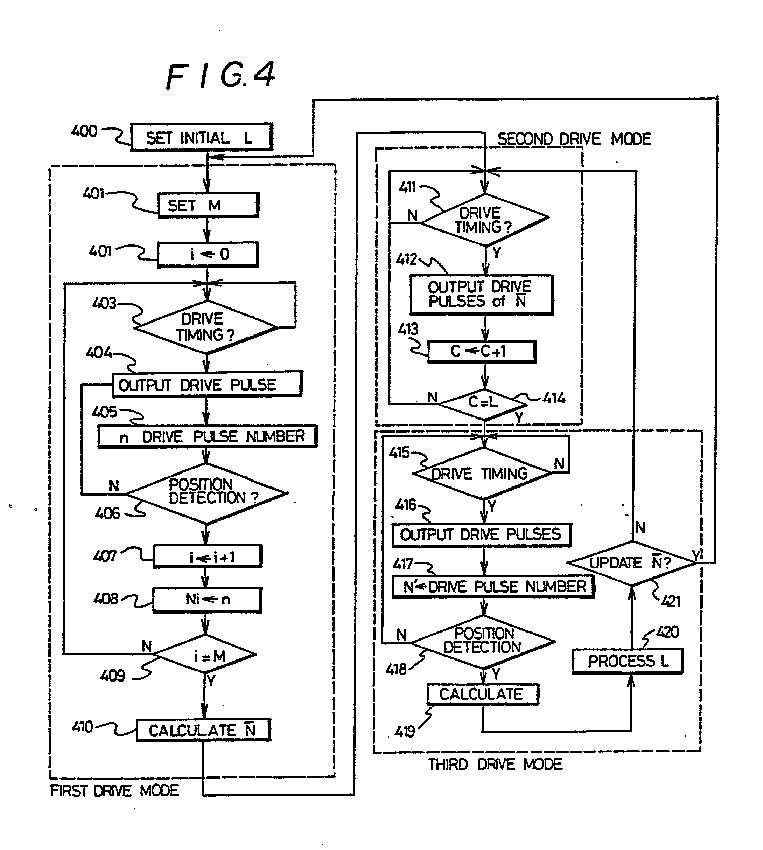

Figure 3 is a timing chart of a drive timing pulse signal KT, drive pulse signals KP and a displacement or position detection signal IK during the operation in the first drive mode.

When the timing pulse signal KT is held at level "H", the output Q1 of the RS latch circuit 207 is made level "H", so that the drive pulse signals KP are applied to the AND gate 205 whose output Q6 is supplied to actuator driver 208 so as to drive the actuator 110. The output Q6 is also supplied to one input of the AND 206 whose output Q7 is supplied to the counter 108. The other input of the AND gate 206 is the output Q2 of the OR gate 201. During drive, when the displacement or position detection signal IK indicative of the completion of a given displacement of the actuator after one intermittent drive is inputted into a re-set terminal of the RS latch circuit 207, the output Q1 is turned to level "L" and the AND gate 205 is turned OFF so that the signal KP is blocked from the actuator. At this time, the counter 108 counts the drive signals KP (for example, a number of pulses) supplied to the actuator. The above described operation is repeated for a given number of times. The total of the counted pulse numbers is divided by the given number of times to obtain a mean number $\bar{N}$ of pulses or drive duration per each intermittent drive in the first drive mode. The actuator is driven in the first drive mode for the given number of times, and after this, the first drive mode signal K1 is turned to level "L" and the second drive mode signal K2 is turned to level "H", so that the mean number N of drive pulses are applied to the actuator for each intermittent drive without displacement or position detection. At this time, power is saved since displacement or position detection is not performed.

In general, an actuator effects variable displacement due to variation of load even if the level or intensity of the drive signals is kept constant. DC motors and ultra-sonic wave motors are typical motors of this type.

If the actuator is driven only in the second drive mode, the position of the actuator could deviate during the intermittent drive due to variation of load, etc. Therefore, in order to solve the above mentioned problem, the actuator is driven in the third drive mode as described below.

After drive of the actuator in the second drive mode for a given number of times, the third drive mode signal K3 is turned to level "H" (of course, at this time, the first and second drive mode signals K1 and K2 are held at level "L"). By such operation, the actuator is driven once more with displacement or position detection taking place so as to count the drive duration or the number of drive pulses of the drive signals KP as sampling data. Then, the difference $\Delta N$ ($= 1\,\bar{N} - N'1$) is calculated. If $\Delta N$ is greater than a predetermined value, $\bar{N}$ is up-dated by repeating the first drive mode. If $\Delta N$ is smaller than the predetermined value, the second drive mode is maintained with the same mean number $\bar{N}$. If $\Delta N$ is much smaller, the number of intermittent drives utilising the mean value $\bar{N}$ is increased. This mode selection is carried out according to the result of the sampling in the third mode so as to correct displacement deviation of the actuator periodically.

Figure 4 is a flow chart illustrating the above described operation. In Figure 4, an integer M in step 401 represents a given number of intermittent drives in the first drive mode for calculating a mean number $\bar{N}$ of drive signals per intermittent drive. Namely, $\bar{N}$ is determined according to the following relation:

$$\bar{N} = \left\{ \sum_{i=1}^{M} N_i \right\} / M$$

where $N_i$ is the number of drive pulses needed to drive the actuator once. The steps 401 to 410 are carried out in the first drive mode. An integer number L in step 400 represents a number of intermittent drives in the second drive mode where the actuator is driven intermittently according to the mean number $\bar{N}$ of drive signals calculated in the first drive mode. The steps 411 to 414 are carried out in the second drive mode.

When the number of intermittent drives in the second drive mode reaches the set number L, the third drive mode is selected. In this mode, the difference $\Delta N$ between $\bar{N}$ and $N'$ which represents a counted number of drive signals applied to the actuator in the next intermittent drive until the completion of the given displacement. According to the value of $\Delta N$, it is determined whether the number L should be increased or decreased. Further, if $\Delta N$ is smaller than a predetermined value, the calculation to up-date $\bar{N}$ is suspended and the third drive mode is switched to the second drive mode. Steps 415 to 421 are carried out in the third drive mode.

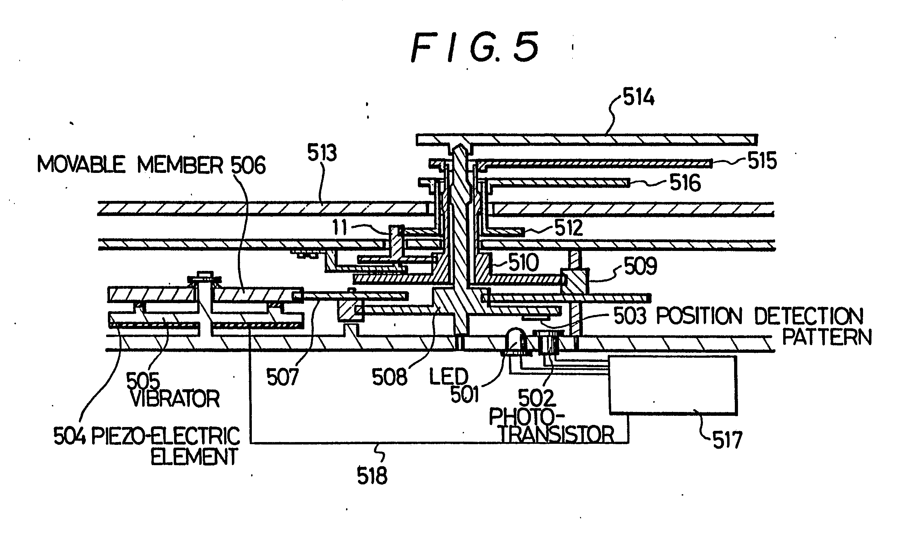

Figure 5 is a diagram showing an embodiment of an analog electronic timepiece having a supersonic wave motor and a drive circuit 517 according to the present invention. The super-sonic wave motor is comprised of a vibrating plate 505 (such as a metal plate), a piezo-electric element 504 attached to the vibrating plate 505 in a polarised arrangement so as to generate a progressive wave, and a movable member 506 disposed in contact with the vibrating plate 505 so as to undergo frictional displacement. This motor has a variable displacement due to the frictional drive depending on the load and contact state between the vibrating plate 505 and the movable member 506 even when a constant number of drive signals is applied to the motor each intermittent drive. If such a motor is utilised as a drive source of a timepiece having hours, minutes and seconds hands 514, 515, 516 without the application of the present invention, sixty displacements or position detections would be needed for each complete revolution of the seconds hand. Further, the power consumption to effect this displacement or detection e.g by a photodetector, would not be negligible if a small battery were utilised as a power source of the electronic timepiece. By employing a driving circuit according to the present invention, the power consumption for displacement or position detection can be greatly reduced.

As shown in Figure 5, the electronic timepiece also has a transmission wheel 511 for transmitting rotation of a minutes wheel 510 with a reduction rate of 1/12, and a transmission wheel 509 for transmitting motion of a seconds wheel 508 with a reduction rate of 1/60. A transmission wheel 507 transmits drive torque of the super-sonic wave motor to the seconds wheel 508. A position detector comprises a light emitting diode 501, a phototransistor 502 and patterns 503 on the seconds wheel 508. The motor is driven by the driving circuit 517 via a line 518.

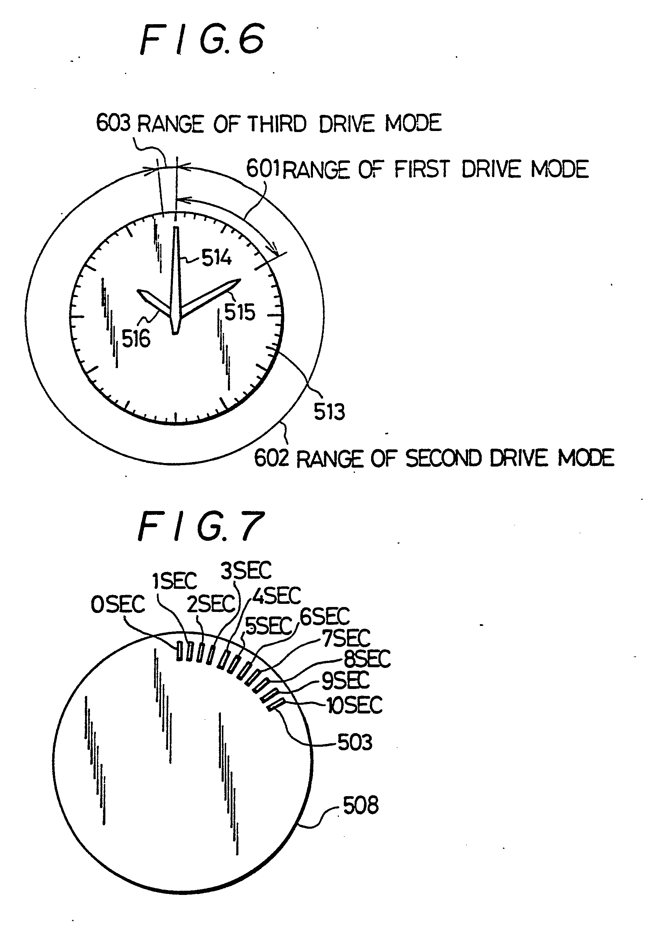

As shown in Figure 6, the super-sonic wave motor is first driven in the first drive mode through a range 601 from 0 seconds to 10 seconds where displacement· or position detection is carried out each intermittent drive of the seconds hand 514 so as to calculate a mean number $\overline{N}$ of the drive signals per second. Next, the motor is driven in the second drive mode to another range from 11 seconds to 59 seconds where the motor receives $\overline{N}$ drive signals each second. In the further range 603 from 59 seconds to 0 seconds, the motor is driven in the third drive mode to counter number $N'$ until completion of displacement of the seconds hand from 59 seconds to 0 seconds. $N'$ and $\overline{N}$ are compared with each other to determine if $\overline{N}$ should be up-dated or not. If the motor is to continue to be ·driven in the second drive mode, a range 602 from 0 seconds to 59 seconds becomes the range through which the motor is driven according to the second drive mode, since the displacement or position detection is suspended in the range from 0 seconds to 10 seconds.

Figure 7 is a diagram showing the seconds wheel 508 of the electronic timepiece of Figure 5 in which mark patterns 503 used for displacement or position detection are provided only on a part of its circumference. The marks are numbered 0 to 10 indicating seconds.

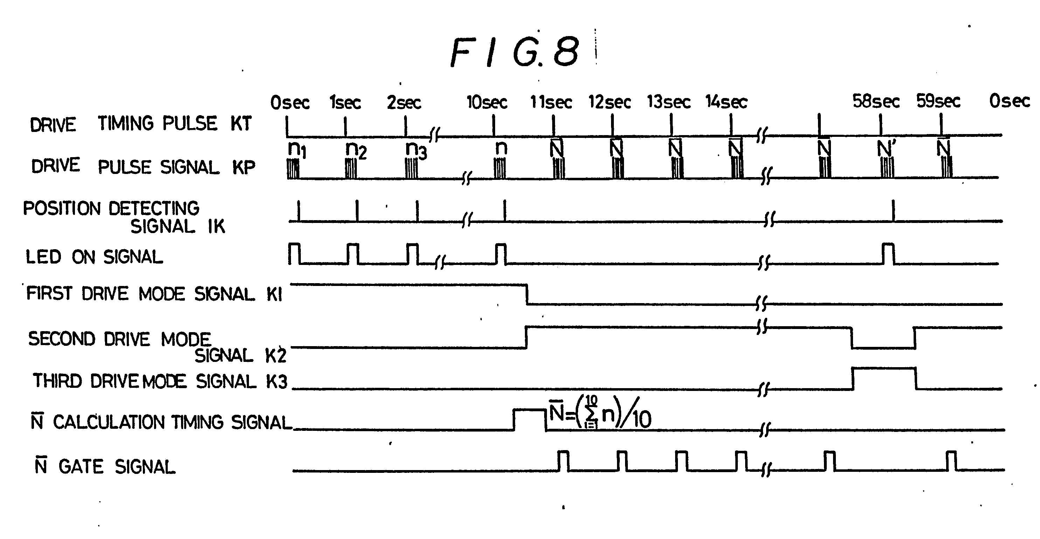

Figure 8 is a timing chart showing the timing relation of displacement or position detection and intermittent drive in the electronic timepiece shown in Figure 5. In the first drive mode during the interval from 0 seconds to 10 seconds, the position detection is carried out in response to the application of the drive pulse signals KP. After 10 seconds, $\overline{N}$ is calculated. Next, the actuator is driven according to the calculated $\overline{N}$ of drive pulses, in the second drive mode through to 59 seconds. During the drive from 59 seconds to 0 seconds, the actuator is driven in the third drive mode with displacement or position detection taking place. At this time, the amount $N'$ of drive signals is counted to calculate $\Delta N(\overline{N} - N')$. According to the value of $\Delta N$, it is determined whether the first drive· mode should be carried out or the second drive mode should be maintained. If the figure $\Delta N$ is small, the motor is driven in the second drive mode after 0 seconds for one complete revolution of the seconds hand.

According to the present invention, in the actuator having a displacement or position detector which consumes a great amount of power or which cannot be provided with a great number of position detection marks, the position detection is carried out several times for the initial drives to calculate a mean amount of the drive signals per intermittent drive. Thereafter, the actuator is intermittently driven according to the mean amount without displacement or position detection so that power which would be consumed by displacement or position detection can be effectively saved. Moreover, only a few position detection marks are needed in the case of a rotary actuator and it is not necessary to provide detection marks all round the rotary type actuator.

## Claims

1. A drive circuit for driving an actuator to cause intermittent movement through a given displacement characterised by comprising: oscillator means (101) for generating a clock signal; divider means (102) for frequency dividing the clock signal; timing means (103) for producing a drive timing signal in response to an output from the divider means; displacement detecting means (109) for detecting the given displacement of the actuator; counting means (108) for counting an amount of drive signals applied to the actuator during each intermittent drive thereof; setting means (106) for setting a drive condition of the actuator according to counted data from the counting means (108); drive detecting means (107) for detecting a drive state of the actuator; and controller means (105) for selecting a plurality of drive modes according to the set drive condition and detected drive state thereby to control the drive of the actuator.

2. A drive circuit as claimed in claim 1 characterised in that the setting means (106) comprises adding means for adding the counted data to store the added data, calculating means (106b) for calculating a mean amount of the drive signals needed for one intermittent drive of the actuator based on the stored data, and gate means (106a) connected to the calculating means for producing a gate signal effective to output the mean amount of the drive signals thereby to set the drive condition.

3. A drive circuit as claimed in claim 1 or 2 characterised in that the drive detecting means includes difference calculating means (107) for calculating a difference between the mean amount of the drive signals and a sample amount of the drive signals applied to the actuator in response to a drive timing signal until the detection of the given displacement thereby to detect the drive state of the actuator.

4. A drive circuit as claimed in any preceding claim characterised in that the controller means (105) includes selecting means for selecting a first mode (K1) in which the mean amount of the drive signals is calculated during intermittent drive of the actuator, a second mode (K2) in which the mean amount of the drive signals is successively applied to the actuator for a predetermined number of intermittent drives of the actuator, and a third mode (K3) in which the difference between the mean amount of the drive signals and a sample amount of the drive signals applied to the actuator until the detection of the given displacement is calculated after the predetermined number of intermittent drives.

# F I G. 1

101 OSCILLATOR

102 DIVIDER

103 DRIVE TIMING PULSE GENERATOR

104 MOTOR DRIVE SIGNAL GENERATOR

105 DRIVE MODE CONTROLLER

110 ACTUATOR

106 GATE CIRCUIT FOR OUTPUTTING A MEAN PULSE NUMBER ($\bar{N}$) OF DRIVE SIGNALS (106a)

106b CALCULATOR FOR A MEAN PULSE NUMBER ($\bar{N}$) OF DRIVE SIGNALS

108 COUNTER FOR COUNTING A DRIVE PULSE NUMBER

109 POSITION OR DISPLACEMENT DETECTOR

107 CALCULATOR FOR CALCULATING DRIVE PULSE NUMBER DIFERENCE ($\Delta N$)

EP 0 308 126 A2

## F I G. 2

207 RS LATCH CIRCUIT

DRIVE PULSE SIGNAL

DRIVE TIMING PULSE — KT — S — Q — Q1

POSITON DETECTING SIGNAL — IK — R

FIRST DRIVE MODE SIGNAL — K1

THIRD DRIVE MODE SIGNAL — K3

201 — Q2

SECOND DRIVE MODE SIGNAL — K2

GATE CIRCUIT FOR N̄ — N̄

202 — Q3

203 — Q4

204 — Q5

205

KP — Q6

206 — Q7

DRIVE PULSE NUMBER COUNTER — 108

208 ACTUATOR DRIVER

110 ACTUATOR

EP 0 308 126 A2

## F I G. 3

DRIVE TIMING PULSE SIGNAL — KT

DRIVE PULSE SIGNAL — Q6

POSITION DETECTION PULSE SIGNAL — IK

EP 0 308 126 A2

# F I G.4

**SET INITIAL L** — 400

**FIRST DRIVE MODE**

- 401 — **SET M**
- 401 — $i \leftarrow 0$
- 403 — **DRIVE TIMING?**
- 404 — **OUTPUT DRIVE PULSE**
- 405 — **n DRIVE PULSE NUMBER**
- 406 — **POSITION DETECTION?** — N
- 407 — $i \leftarrow i+1$
- 408 — $Ni \leftarrow n$
- 409 — $i = M$ — N / Y
- 410 — **CALCULATE $\bar{N}$**

**SECOND DRIVE MODE**

- 411 — **DRIVE TIMING?** — N / Y
- 412 — **OUTPUT DRIVE PULSES of $\bar{N}$**
- 413 — $C \leftarrow C+1$
- 414 — $C = L$ — N / Y

**THIRD DRIVE MODE**

- 415 — **DRIVE TIMING** — N / Y
- 416 — **OUTPUT DRIVE PULSES**
- 417 — $N' \leftarrow$ **DRIVE PULSE NUMBER**
- 418 — **POSITION DETECTION** — N / Y
- 419 — **CALCULATE**
- 420 — **PROCESS L**
- 421 — **UPDATE $\bar{N}$?** — N / Y

# FIG. 5

MOVABLE MEMBER 506

513

514

515

516

512

11

510

509

503 POSITION DETECTION PATTERN

505 VIBRATOR

507

508 LED 501

502 PHOTO-TRANSISTOR

517

504 PIEZO-ELECTRIC ELEMENT

518

EP 0 308 126 A2

# F I G. 6

603 RANGE OF THIRD DRIVE MODE

601 RANGE OF FIRST DRIVE MODE

514

515

516

513

602 RANGE OF SECOND DRIVE MODE

# F I G. 7

0SEC
1SEC
2SEC
3SEC
4SEC
5SEC
6SEC
7SEC
8SEC
9SEC
10SEC

503

508

# F I G. 8

EP 0 308 126 A2

# F I G.9

LED DRIVE CONTROL SIGNAL

905

907

902

903

POSITION DETECTION SIGNAL

906 AMPLIFIER

901